(19) **Europäisches Patentamt**

**European Patent Office**

**Office européen des brevets**

(11) Veröffentlichungsnummer: **0 272 429 B1**

(12) **EUROPÄISCHE PATENTSCHRIFT**

(45) Veröffentlichungstag der Patentschrift: **27.05.92**

(21) Anmeldenummer: **87116483.6**

(22) Anmeldetag: **07.11.87**

(51) Int. Cl.⁵: **H01S 3/036**, H01S 3/041, H01S 3/0979

(54) Gastransportlaser.

(30) Priorität: **20.12.86 DE 3643735**

(43) Veröffentlichungstag der Anmeldung:
**29.06.88 Patentblatt 88/26**

(45) Bekanntmachung des Hinweises auf die
Patenterteilung:
**27.05.92 Patentblatt 92/22**

(84) Benannte Vertragsstaaten:
**AT BE CH DE ES FR GB GR IT LI NL SE**

(56) Entgegenhaltungen:
**EP-A- 0 109 025**
**DE-A- 3 235 170**
**DE-A- 3 245 959**
**DE-A- 3 323 954**
**DE-A- 3 442 898**

(73) Patentinhaber: **TZN Forschungs- und Entwicklungszentrum Unterlüss GmbH
Neuensothriether Strasse 20
W-3104 Unterlüss(DE)**

(72) Erfinder: **Gürs, Karl, Prof. Dr.
Weissdornweg 23
W-6236 Eschborn(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft einen Gastransportlaser, wie er im Oberbegriff des Anspruchs 1 näher definiert ist und aus DE-A-3 245 959 hervorgeht.

Die Leistungsfähigkeit der Moleküllaser und insbesondere der $CO_2$-Laser nimmt mit steigender Temperatur im Lasergas ab. Zu den Ursachen hierfür zählt, daß die Breite der Fluoreszenzlinie mit zunehmender Temperatur größer wird, die Anregungsenergie sich auf eine zunehmende Zahl von Rotationsniveaus verteilt, die Zahl der desaktivierenden Stöße zunimmt, die Besetzung des Laserendniveaus durch thermische Anregung wächst und damit die Inversion abnimmt; (siehe K. Gürs, "Laser 75 Opto-Electronics", München 1975, Conference Proceedings, S. 30 bis 37).

Aus diesem Grund wurden bereits verschiedene Methoden entwickelt, nach denen man die Temperatur im Lasergas niedrig halten kann. Bei einer besonders günstigen Methode führt man die Wärme mit dem Lasergas ab (Gastransportlaser). Nach dieser Methode arbeitende Laser bestehen aus einer Anregungszone mit angrenzendem oder integriertem optischem Resonator, von wo aus das Gas über Kühler geleitet wird, und einer Pumpe.

Man unterscheidet Gastransportlaser mit longitudinaler und transversaler Gasströmung. Bei den transversalen Systemen ist die Aufenthaltsdauer der angeregten aktiven Moleküle im Laserresonator relativ klein und im allgemeinen kleiner als die Lebensdauer. Dadurch erhöht sich die sogenannte Sättigungsleistung. Sie kann größer werden als die tatsächliche Leistungsdichte im Laserresonator. Dies hat zur Folge, daß die Anregungsenergie zu einem großen Teil mit dem Lasergas abtransportiert und nicht in Laserleistung umgewandelt wird. Daher haben Gastransportlaser mit transversaler Strömung einen vergleichsweise kleinen Wirkungsgrad, der im allgemeinen bei weniger als 10 % liegt. Außerdem ist beim transversalen Laser die Anregung relativ inhomogen, was zu ungünstigen Strahleigenschaften führt.

Daher verlagert sich das Interesse allgemein zunehmend auf Laser mit longitudinaler Gasströmung. Allerdings sind auch bei diesen entsprechend große Wärmemengen abzuführen, und es müssen große Gasmengen umgepumpt werden. Bei den bekannten Gas-Transport-Lasern mit longitudinaler Gasströmung werden separate Pumpen und Kühler verwendet, die durch Rohrleitungen verbunden sind. Die bekannten Laser dieser Art sind daher groß und aufwendig. Ihre Einsatzmöglichkeit ist wegen ihrer Unhandlichkeit begrenzt. Außerdem verursachen die Rohrleitungen einen entsprechenden Strömungswiderstand. Dadurch sinkt die Leistungsfähigkeit des Systems, oder man benötigt besonders große Pumpen.

Diese Nachteile der bekannten Gastransportlaser konnten bereits durch eine Anordnung beseitigt werden, bei der die Laserkammer als gekühltes Rohr ausgebildet und konzentrisch innerhalb einer Umwälzturbine angeordnet ist (siehe DE-A-31 21 372).

Allerdings ist dieser Laser nur mit großem technischen Aufwand zu realisieren (vgl. auch DE-A-32 45 959). Jedoch weisen diese bekannten Laser insbesondere noch folgende Nachteile auf:

1. Bei Anlegen einer Hochspannung an den Elektrodenring besteht die Möglichkeit, daß sich im Laserrohr nicht nur in Strömungsrichtung eine Gasentladung ausbildet, sodern ein Durchschlag in Gegenrichtung zum Gehäuse oder Kühler hin erfolgt. Um dies zu vermeiden, müssen der Elektrodenring weit innen im Laserrohr angebracht und eine große Totstrecke (anregungsfreier Raum) in Kauf genommen werden.

2. Bei leistungsfähigen longitudinalen Gas-Transport-Lasern müssen Rohre von mehr als 25 mm Durchmesser verwendet werden, in denen nur schwer eine gleichförmige Hochspannungs-Glimmentladung erzeugt werden kann. Einige Vorschläge zur Verbesserung der Homogenität sind bekannt: Nach Herziger et al. (DE-A-33 23 954) verbessert eine Verwirbelung mit tangentialer Einleitung des Lasergases die Gleichförmigkeit der Entladung. Von J. E. Harry und S. SN Saleh werden segmentierte Elektroden verwendet (Appl. Phys. Lett. 40, 1982, 359-361). Bei H. Sugawara et al. findet sich der Vorschlag, den Elektrodenringträger in bestimmter Weise zu formen (Rev. of Laser Eng. 9, Japan, 1981 S. 21 bis 30). Diese Vorschläge bringen Verbesserungen, stellen aber keine idealen Lösungen dar.

Mit Hochfrequenzanregung könnte eine gleichförmige Entladung erreicht werden; jedoch scheint der Aufwand für diese Art der Anregung, insbesondere bei großen Laserleistungen, unvertretbar hoch.

3. Beim Laser nach der DE-A-45 959 ist eine Kopplung mehrerer Laser ohne Verwendung zusätzlicher Spiegel (Umlenkspiegel) nur möglich, wenn man die Laser in Längsrichtung aneinanderfügt. Dies führt zu sehr langen unhandlichen Systemem.

Der vorliegenden Erfindung liegt daher die Aufgabe zugrunde, einen Laser der eingangs erwähnten Art so weiterzuentwickeln, daß er einfach, kostengünstig und unter optimaler Raumausnutzung aufgebaut ist und dabei trotzdem einen hohen Wirkungsgrad aufweist.

Diese Aufgabe wird erfindungsgemäß durch die Merkmale des kennzeichnenden Teils des Anspruchs 1 gelöst.

Besonders vorteilhafte Ausgestaltungen der Erfindung sind in den Unteransprüchen offenbart.

Der Laser gemäß der Erfindung besitzt gegenüber den bekannten Laser-Anordnungen vor allem die Vorteile, daß sowohl die Größe und das Gewicht des Lasers reduziert wird und wobei Ausstrahlungseigenschaften und Wirkungsgrad optimiert sind. Die Erfindung bietet ferner den Vorteil einer Modulbauweise, so daß bei optimaler Raumausnutzung durch Zusammenfügen mehrerer Module die Ausgangleistung leicht den Bedürfnissen angepaßt werden kann.

Schließlich löst die Erfindung zusätzlich ein prinzipielles physikalisches Problem:
Dies resultiert aus der Tatsache, daß die Ionisierungsenergie der Lasergasmoleküle wesentlich größer ist (13,7 eV für $CO_2$ und 15,5 eV für $N_2$) als die Elektronenenergie für optimale Anregung des Laserausgnagsniveaus (1 bis 2 eV). Um eine selbständige Gasentladung aufrechtzuerhalten, werden somit Elektronenenergie benötigt, bei denen nur eine sehr ineffektive Anregung möglich ist, wodurch sich ein kleiner Wirkungsgrad ergibt. Zur Erhöhung des Wirkungsgrades muß man die Prozesse der Elektronenerzeugung und der Beschleunigung der für die Anregung benötigten Elektronen voneinander trennen. Dies gelingt erfindungsgemäß durch ein hybrides Anregungsverfahren.

Weitere Einzelheiten und Vorteile der Erfindung ergeben sich aus den folgenden, anhand von Figuren erläuterten Ausführungsbeispielen.

Es zeigen:

Fig. 1     eine Draufsicht auf das Gasführungssystem einer erfindungsgemäßen Laseranordnung;

Fig. 2     eine Seitenansicht auf das Gasführungssytem nach Fig. 1;

Fig. 3     ein weiteres Ausführungsbeispiel mit zwei Laserresonatoren;

Fig. 4     die perspektivische Ansicht eines Lasermodules nach Fig. 3;

Fig. 5     eine perspektivische Ansicht mehrerer hintereinandergeschalteter Laseranordnungen nach Fig. 4;

Fig. 6     den Querschnitt durch ein Laserrohr; und

Fig. 7     eine spiralenförmige Gaszuführung in das Laserrohr.

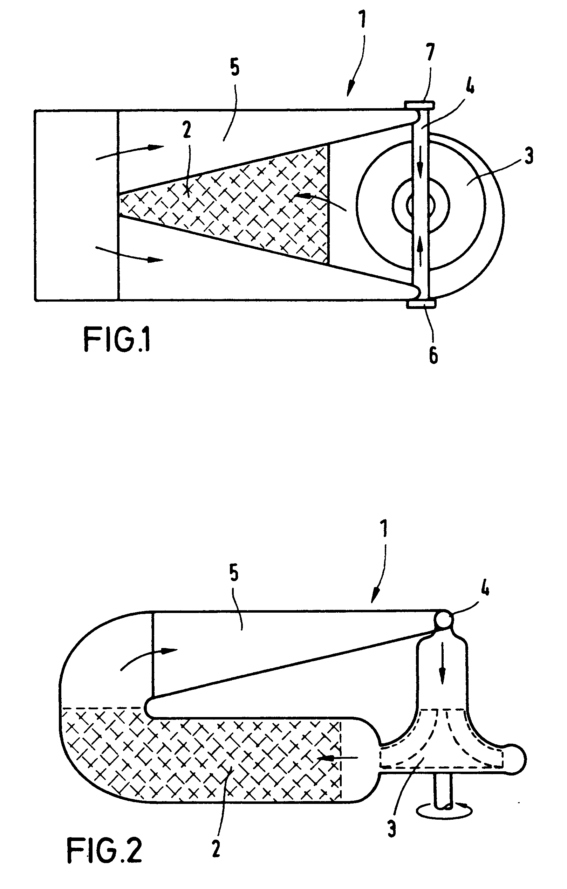

In Fig. 1 ist mit 1 ein Gastransportlaser bezeichnet, der im wesentlichen aus einem Kühlsystem 2, einem Radialgebläse 3, einem Laserrohr 4 und einem Gaszulaufsystem 5 besteht.

Die an den Enden des Laserrohres 4 angeordneten Spiegel sind mit 6 und 7 bezeichnet und bilden den Laserresonator.

Eine Seitenansicht des Gasführungssystems nach Fig. 1 zeigt die Fig. 2. Dabei wurden für die gleichen Baueinheiten die gleichen Bezugszeichen verwendet.

Im folgenden wird kurz auf die Funktionsweise des Gastransportlasers nach Fig. 1 und 2 eingegangen. Das Lasergas wird mit dem Radialgebläse 3 ohne Zwischenrohrleitung aus der Mitte des Laserrohres 4 abgesaugt. Das Laserrohr ist in bekannter Weise aus einem elektrisch isolierenden Material hergestellt (z. B. Glas, Quarz oder Keramik). Das Gas strömt dann direkt oder über einen Diffusor aber ohne Rohrleitung in das Kühlsystem 2, von dem aus es in das aus elektrisch isolierendem Material hergestellte Gaszulaufsystem 5 umgelenkt wird. Das Lasergas wird jeweils an den beiden Enden wieder in das Laserrohr 4 zurückgeführt.

Somit sind die Strömungsrichtung im Kühlsystem 2 bzw. im Gaszulaufsystem 5, im Laserrohr 4 und die Achse des Radialgebläses 3 erfindungsgemäß jeweils senkrecht zueinander orientiert. Die optimale Länge der aktiven Laserstrecke ergibt sich aus zwei Forderungen: Sie müssen gleichzeitig so lang wie nötig (ausreichende Wechselwirkungsdauer Molekül-Strahlungsfeld) und so kurz wie möglich (kompakte Bauweise) sein und die Länge der Totstrecken ist zu minimieren. Insgesamt hat sich eine Gesamtlänge des Laserohres 4 von 55 bis 65 cm bei einer Gasgeschwindigkeit von 150 bis 250 m/s als besonders günstig herausgestellt.

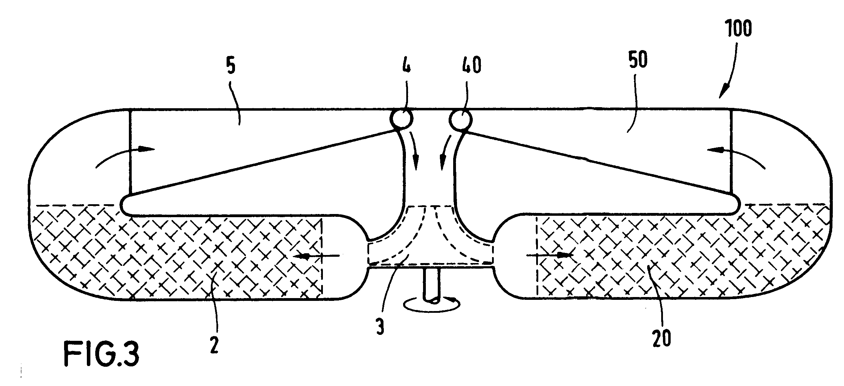

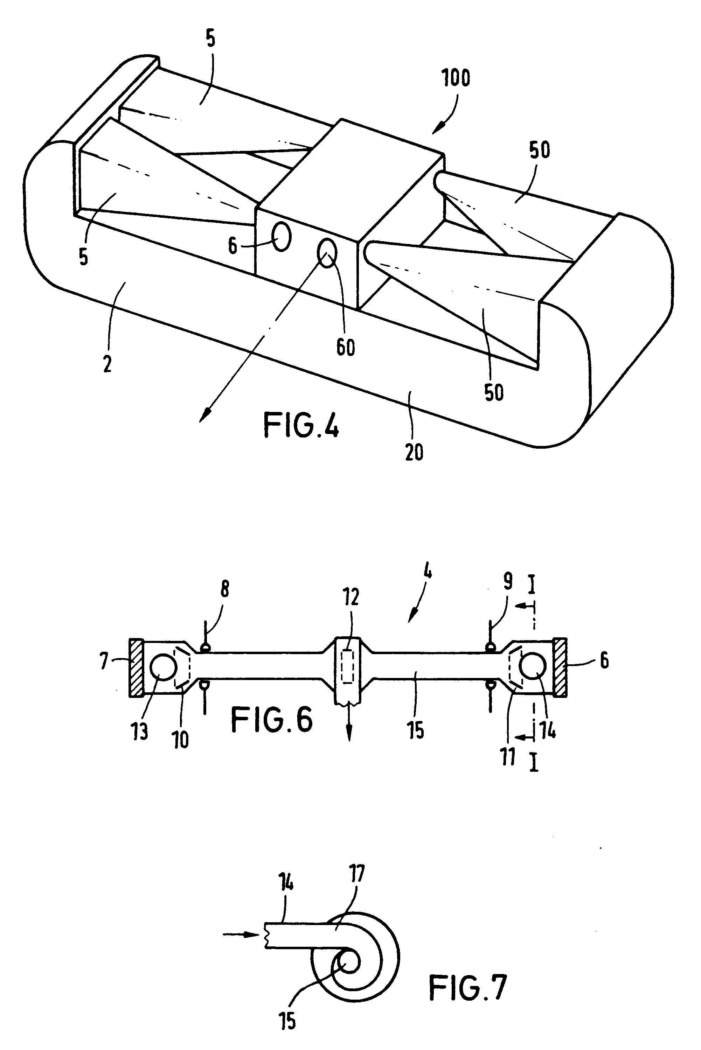

In den Fig. 3 und 4 ist ein weiteres Ausführungsbeispiel der Erfindung dargestellt, bei dem zwei parallel angeordnete Laserrohre vorhanden sind. Das Lasergas strömt dabei einerseits über das Kühlsystem 2 und das Gaszulaufsystem 5 zu dem Laserrohr 4. Andererseits wird das Gas ebenfalls über ein mit 20 bezeichnetes Kühlsystem und ein mit 50 bezeichnetes Gaszulaufsystem dem Laserrohr 40 zugeführt. Wie bei dem ersten Ausführungsbeispiel stehen wieder alle drei Richtungen (Strömungsrichtung im Kühlsystem und Gaszulaufsystem, Laserresonatorachse und Achse des Radialgebläses) paarweise senkrecht aufeinander. Bei diesem Ausführungsbeispiel und bei Rohrdurchmessern von 3 cm hat der erfindungsgemäße Laser eine Ausgangsleistung von ca. 1,5 bis 2,5 kW.

In Fig. 4 ist das Lasermodul mit dem Gasführungssystem nach Fig.3 perspektivisch in einer Gesamtansicht von außen betrachtet dargestellt. Auf der Vorderseite befindet sich ein voll reflektiverender Laserspiegel 6 und ein Auskoppelspiegel 60. Auf der Rückseite (in Fig. 4 nicht dargestellt) sind zwei unter 45° geneigte Spiegel angeordnet, über die die Laserstrahlung von einem Resonator in den anderen umgelenkt wird.

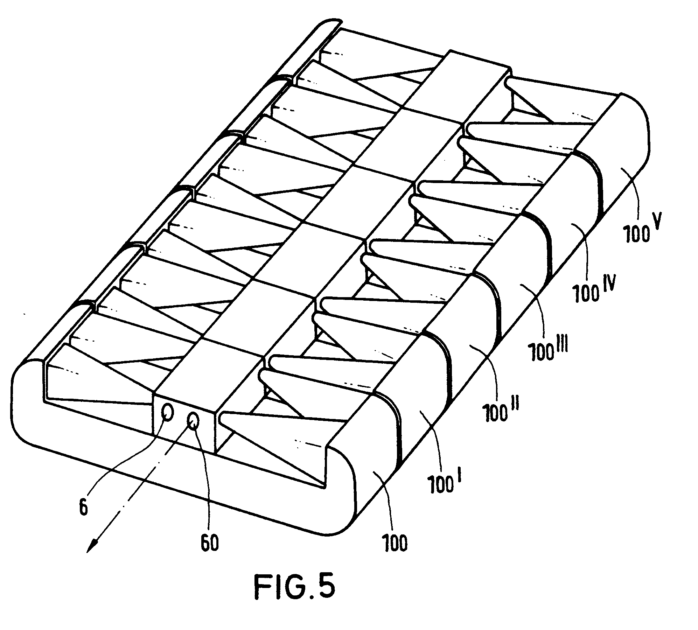

Wie aus Fig. 5 ersichtlich, lassen sich mehrere der in Fig. 4 dargestellten Module zu einem Laser entsprechend hoher Leistung zusammenfassen.

In Fig. 6 ist der Längsschnitt des in Fig. 1 mit 4 bezeichneten Laserresonators wiedergegeben. Dabei sind mit 6 und 7 die Laserspiegel mit 8 und 9 zwei Hochfrequenzelektroden und mit 10, 11 und 12 Hochspannungsringelektroden bezeichnet.

Zur Trennung der Prozesse der Erzeugung der für die Anregung benötigten freien Elektronen und der Zuführung der Anregungsenergie wird erfindungsgemäß ein hybrides Anregungsschema verwendet: Über die HF-Elektroden 8 und 9 außerhalb des Entladungsraumes 15 an den Enden des Laserresonators 4 wird Hochfrequenzenergie (Frequenz ca. 10 bis 30 MHz) mit Hilfe eines nicht dargestellten Generators in den Laserresonator 4 eingekoppelt und ein Plasma erzeugt. Die dabei erzeugten freien Elektronen werden in einem Hochspannungs-Driftfeld beschleunigt und stehen für die Anregung zur Verfügung. Die Hochspannung wird dabei an Elektrodenringen 10 und 11 (es können auch Elektrodenstifte verwendet werden) angelegt, die in Strömungsrichtung wenige cm vor den HF-Elektroden 8 und 9 inner halb einer Verdikkung des Laserresonators 4 angeordnet sind. Eine weitere (Gegen-) Elektrode 12 befindet sich in der Mitte der Laseresonators an der Stelle, an der das Lasergas durch das Radialgebläse 3 (vgl. Fig. 2) abgesaugt wird.

Als vorteilhaft hat sich erwiesen, etwa 5 bis 20 % der gesamten Anregungsenergie als Hochfrequenzenergie einzukoppeln und die Hochspannungsleistung so einzubringen, daß bei ausgeschaltetem HF-Sender noch keine selbständige Entladung entsteht. Auf diese Weise ergibt sich eine sehr homogene Entladung und ein besonders großer Wirkungsgrad.

Das Lasergas kann an den verdickten Enden des Laserresonators 4 senkrecht in der Rohrmitte durch die Öffnungen 13 und 14 zugeführt werden. Bei geringem Anteil an HF-Anregungsenergie ist die Einbringung über eine spiralförmige Führung 17 vorteilhaft (Fig. 7). Infolge der spiralförmigen Bewegung des Lasergases verbessert sich auch hierdurch die Homogenität der Gasentladung (vgl. DE 33 23 954 Al). Fig. 7 zeigt einen Schnitt durch das Laserrohr 4 entlang der in Fig. 6 dargestellten Linie I-I.

**Patentansprüche**

1. Gastransportlaser (1, 100) mit longitudinaler Gasströmung und völliger Integration der Komponenten mit mindestens einem Laserrohr (4, 40), bei dem das Lasergas in der Mitte des jeweiligen Laserrohres (4, 40) abgezogen, dann über ein Radialgebläse (3), ein Kühlsystem (2, 20) und ein Gaszulaufsystems (5, 50) hindurchgeführt und anschließend den jeweils beiden Enden des Laserrohres (4,40) zugeführt wird und bei dem das Laserrohr (4, 40) senkrecht auf der Achse des Radialgebläses (3) angeordnet ist, **gekennzeichnet durch** die Merkmale:

    a) das Laserrohr (4,40) und der Laserresonator sind im wesentlichen senkrecht zur Richtung der in dem Kühlsystem (2, 20) und dem Gaszulaufsystem (5, 50) verlanfenden Gaströmung angeordnet und erstrecken sich in Richtung der kleineren Ausdehnung des Lasersystems;

    b) zur Anregung des Lasergases wird das Lasergas gleichzeitig einer Hochfrequenzentladung und einer Hochspannungsentladung eingesetzt.

2. Gastransportlaser nach Anspruch 1, **dadurch gekennzeichnet,** daß zwei parallele Laserrohre (4, 40) verwendet werden, und daß das Lasergas aus der Mitte beider Rohre durch das Radialgebläse abgezogen und symmetrisch auf beiden Seiten über das Kühlsystem (2, 20) und das Gaszulaufsystem (5, 50) wieder jeweils in die Laserrohre (4, 40) zurückgeführt werden.

3. Gastransportlaser nach Anspruch 1, **dadurch gekennzeichnet,** daß der Anteil der Hochfrequenzleistung an der gesamten Anregungsleistung zwischen 5 und 25 % liegt.

4. Gastransportlaser nach Anspruch 1,**dadurch gekennzeichnet,** daß die Hochspannungsentladung mit Spannungen betrieben wird, bei denen ohne Hochfrequenzanregung noch keine selbständige Entladung auftritt.

5. Gastransportlaser nach Anspruch 1, **dadurch gekennzeichnet,** daß die Einkopplung der Hochfrequenzleistung über externe Elektroden (8, 9) erfolgt, die sich außerhalb des Entladungsraumes (15) befinden.

6. Gastransportlaser nach Anspruch 1, **dadurch gekennzeichnet,** daß das Lasergas an den Enden des Laserrohres (4, 40) über eine spiralförmige Führung (17) zugeführt wird.

7. Gastransportlaser in Modulbanweise, **dadurch gekennzeichnet,** daß mehrere Laser (100 bis 100$^V$) nach einem der Ansprüche 1 bis 6, zu einem leistungsstärkeren Laser derart zusammengefaßt werden, daß die Laserresonatoren (4, 40) auf derselben Achse hintereinander angeordnet sind.

**Claims**

1. Gas transport laser (1,100) having longitudinal gas flow and full integration of the components and including at least one laser tube (4,40) through which laser gas is extracted from the middle of the laser tube concerned (4,40) then conveyed through a radial blower (3), a cooling system (2,20) and a gas feed system (5,50) and finally conveyed to the respective two ends of the laser tube (4,40) wherein the laser tube (4,40) is positioned vertically on the axis of the radial blower (3), characterised by the following features:

a) the laser tube (4,40) and the laser resonator are substantially perpendicular to the direction of the gas flow to the cooling system (2,20) and the gas feed system (5,50) and then extend in the direction of the shorter distance covered by the laser system;

b) for the excitation of the laser gas the said laser gas is at the same time subjected to a high frequency discharge and to a high tension discharge.

2. Gas transport laser in accordance with Claim 1, characterised by the fact that two parallel laser tubes (4,40) are employed and that the laser gas is drawn off from the middle of the two tubes through the radial blower and in each case returned to the laser tubes (4,40) on the two respective sides symmetrically through the cooling system (2,20) and the gas feed system (5,50).

3. Gas transport laser in accordance with Claim 1, characterised by the fact that the proportion represented by the high frequency power in the total excitation power amounts to between 5 and 25%.

4. Gas transport laser in accordance with Claim 1, characterised by the fact that the high tension discharge is operated at voltages at which no independent discharge occurs without high frequency excitation.

5. Gas transport laser in accordance with Claim 1, characterised by the fact that the high frequency power is introduced via external electrodes (8,9) situated outside the discharge chamber (15).

6. Gas transport laser in accordance with Claim 1, characterised by the fact that the laser gas is fed in at the ends of the laser tube (4,40) via a spiral duct (17).

7. Gas transport laser of modular construction, characterised by the fact that a number of lasers (100 to 100ᵛ), in accordance with one of Claims 1 to 6, are combined to form a higher power laser in such a way that the laser resonators (4,40) are situated in succession on one and the same axis.

**Revendications**

1. Laser à circulation de gaz (1,00), à écoulement de gaz longitudinal et intégration totale des composantes, comportant au moins un tube laser (4,40), dans lequel le gaz laser est extrait au centre du tube laser (4,40), puis passé, par une soufflante radiale (3), un système de refroidissement (2,20) et un système d'alimentation en gaz (5,50) et ensuite amené aux deux extrémités du tube laser (4,40), et dans lequel le tube laser (4,40) est disposé perpendiculairement à l'axe de la soufflante radiale (3), caractérisé par le caractéristiques suivantes :

a) le tube laser (4,40) et le résonateur laser sont disposés sensiblement perpendiculairement par rapport à la direction du courant de gaz qui s'écoule dans le système de refroidissement (2,20) et le système d'alimentation en gaz (5,50);

b) le gaz laser est simultanément exposé à une décharge à haute fréquence et à une décharge à haute tension, en vue d'obtenir son excitation.

2. Laser à circulation de gaz selon la revendication 1, caractérisé en ce qu'on utilise deux tubes laser (4,40) parallèles et que le gaz laser est extrait du centre des deux tubes, au moyen de la soufflante radiale, et retourné dans chacun des tubes laser (4,40), symétriquement, des deux côtés, en passant par le système de refroidissement (2,20) et le système d'alimentation en gaz (5,50).

3. Laser à circulation de gaz selon la revendication 1, caractérisé en ce que la partie de la puissance à haute fréquence utilisée pour la puissance d'excitation globale est comprise ent e 5 et 25%.

4. Laser à circulation de gaz selon la revendication 1, caractérisé en ce que le décharge à haute tension est effectuée avec des tensions pour lesquelles aucune décharge automatique ne se produit encore sans qu'il y ait excitation à haute fréquence.

5. Laser à circulation de gaz selon la revendication 1, caractérisé en ce que le couplage de la puissance à haute fréquence s'effectue par l'intermédiaire d'électrodes externes (8,9) qui se trouvent à l'extérieur de l'enceinte de décharge (15).

6. Laser à circulation de gaz selon la revendication 1, caractérisé en ce que le gaz laser est
amené aux extrémités du tube laser (4,40) par
l'intermédiaire d'un guidage spiral (17).

7. Laser à circulation de gaz à construction modulaire caractérisé en ce que plusieurs lasers
(100 à 100$^v$) selon l'une des revendications 1 à
6 sont groupés, en formant un laser de plus
forte puissance, de telle façon que les résonateurs laser (4,40) sont disposés les uns derrière les autres sur le même axe.

FIG.1

FIG.2

FIG.3

FIG.4

FIG.6

FIG.7

**FIG.5**